# EUROPEAN PATENT SPECIFICATION

(11) **EP 2 315 065 B1**
(45) Date of publication and mention of the grant of the patent: **13.05.2015**
(21) Application number: 10013563.1
(22) Date of filing: 12.10.2010
(51) Int. Cl.: G02B 21/06, G02B 21/08, G02B 21/16, G02B 21/32

(54) **Microscope**
Mikroskop
Microscope

(30) Priority: 26.10.2009 JP 2009245279
(43) Date of publication of application: 27.04.2011
(73) Proprietor: OLYMPUS CORPORATION, Shibuya-ku Tokyo 151-0072 (JP)
(72) Inventor: Honda, Susumu, Tokyo 151-0072 (JP); Nakata, Tatsuo, Tokyo 151-0072 (JP)
(74) Representative: Gunzelmann, Rainer

(56) References cited:
- EP-A1- 1 617 252
- WO-A2-2005/010571
- DE-A1-102004 011 770
- JP-A- 2003 156 698
- US-A1- 2003 086 145
- US-A1- 2007 096 014
- US-B1- 6 243 197

## Description

### BACKGROUND OF THE INVENTION

### 1. FIELD OF THE INVENTION

The present invention relates to microscopes.

This application is based on Japanese Patent Application No. 2009-245279.

### 2. DESCRIPTION OF RELATED ART

In the related art, there is a known microscope that includes a light source for irradiating a specimen with coherent light or incoherent light, a photodetector for detecting fluorescence coming from the specimen, and a digital micromirror device (hereinafter referred to as "DMD") disposed between the light source and the photodetector and having a plurality of micromirrors (see, for example, the Publication of Japanese Patent No. 3634343, the Publication of Japanese Patent No. 4084303, and Japanese Unexamined Patent Application, Publication No. 2004-109348).

Document US 2003/0086145 A1 concerns a spatial light modulator apparatus for an optical microscope system including an optical head with a mounting flange for mounting the optical head to a port of the microscope, a DMD for generating a pattern image of light, a light source mount for receiving a source of illumination, and one or more optical elements for directing light from the source of illumination to the DMD and to direct the pattern image generated by the DMD to the microscope.

### BRIEF SUMMARY OF THE INVENTION

Some or all of the above problems are overcome by a microscope having the features of claim 1.

A microscope disclosed in the Publication of Japanese Patent No. 3634343 causes coherent light (laser light) to be incident on a DMD to form a pattern to be projected on a specimen with the DMD before projecting the light on the specimen. However, this microscope has a problem in that the DMD diffracts the coherent light incident thereon, thus leaving unevenness in the intensity of the illumination light.

In addition, a microscope disclosed in the Publication of Japanese Patent No. 4084303 generates a pattern image of light with a DMD and directs it to the microscope, and the light source used is a halogen light source, an arc light source, or a laser light source. However, this microscope has a problem in that it has no element for allowing the illumination to be incident on the DMD in a uniform state and cannot therefore make the incoherent light uniform, thus leaving unevenness in the intensity of the illumination light.

In addition, a microscope disclosed in Japanese Unexamined Patent Application, Publication No. 2004-109348 has a diffuser between a white light source and a DMD to reduce unevenness in the intensity of illumination light. However, this microscope has a problem in that the amount of light is decreased depending on the transmittance of the diffuser.

An object of the present invention, which has been made in light of the circumstances described above, is to provide a microscope that allows irradiation with uniform illumination light without decreasing the amount of light.

To achieve the above object, the present invention employs the solution as defined in claim 1.

The present invention employs a microscope including an incoherent light source that emits incoherent light; a light-guiding member on which the incoherent light coming from the incoherent light source is incident and which guides the incident incoherent light by repeated total reflection; a microdevice array having an array of microdevices each reflecting or transmitting the incoherent light guided by the light-guiding member; a pattern illumination optical system that irradiates a specimen with the incoherent light reflected or transmitted by the microdevice array; an objective lens that collects light coming from the specimen; and a photodetector that is disposed at a position conjugate to the position of the microdevice array and that detects the light coming from the specimen and collected by the objective lens.

According to the present invention, the incoherent light emitted from the incoherent light source is incident on the light-guiding member and is made uniform in the light-guiding member by repeated total reflection. The uniform incoherent light is reflected or transmitted by the microdevices of the microdevice array, and the specimen is irradiated therewith by the objective lens. As a result, for example, a fluorescent substance present in the specimen is excited to emit fluorescence, and the emitted fluorescence is collected by the objective lens and is detected by the photodetector.

At this time, the microdevices for reflection or transmission on the microdevice array can be switched to vary the region irradiated with the incoherent light on the specimen, thus obtaining an image of the specimen in any region. The incoherent light with which the specimen is irradiated is made uniform by the light-guiding member. Thus, according to the present invention, the specimen can be irradiated with uniform incoherent light without decreasing the amount of light, thus obtaining an image without unevenness.

In the above invention, the pattern illumination optical system may include the objective lens, and the microscope may further include a splitting section that splits off the light coming from the specimen and collected by the objective lens from the incoherent light and that directs the light to the photodetector.

In the above invention, the pattern illumination optical system may include a condenser lens disposed opposite the objective lens with the specimen therebetween.

In the above invention, the light-guiding member may be a quartz fiber.

If the light-guiding member is a quartz fiber, the incoherent light can be guided while being efficiently made uniform. A quartz fiber is suitable as the light-guiding member because it has high transmittance for visible light (400 to 600 nm).

In the above invention, the microscope further includes an irradiation optical system that irradiates the microdevice array with the incoherent light guided by the light-guiding member, and the irradiation optical system may project an exit surface of the light-guiding member onto the microdevice array.

If the exit surface of the light-guiding member is projected onto the microdevice array by the irradiation optical system, the incoherent light can be efficiently made uniform. For example, if the irradiation optical system is a critical optical system, the specimen can be irradiated with uniform incoherent light while ensuring incoherence.

In the above invention, the irradiation optical system may irradiate a region larger than a region where the microdevices of the microdevice array are arranged with the incoherent light guided by the light-guiding member.

If a region larger than the region where the microdevices are arranged is irradiated (overfilled) with the incoherent light, it is possible to avoid insufficient light on the periphery of the region irradiated with the incoherent light on the specimen, thus improving the uniformity of the incoherent light. The overfill level may be set such that uneven illumination can be compensated for at the end surface of the light-guiding member, and is preferably set such that, for example, a region about 1.2 times the area of the examination field is illuminated.

In the above invention, the microscope further includes a zoom mechanism that is disposed between the light-guiding member and the microdevice array and that changes the focal distance of the incoherent light.

With the zoom mechanism, the focal distance of the incoherent light can be changed to change the area of the region irradiated with the incoherent light on the microdevice array. Accordingly, for example, the incoherent light can be collected in a particular region (for example, near the center of the microdevice array) to more intensely illuminate the center of the field of view, thus obtaining a brighter image.

In the above invention, the microscope may further include a shift mechanism that is disposed between the zoom mechanism and the microdevice array and that shifts the incoherent light in a direction perpendicular to an optical axis thereof.

With the shift mechanism, the incoherent light can be shifted in a direction perpendicular to the optical axis to shift the irradiation region collected by the zoom mechanism to any region (for example, the peripheral region of the field of view). This allows any region to be intensely irradiated with the incoherent light, thus obtaining a bright image in that region.

In the above invention, the incoherent light source may be independently provided, and the microscope may further include an optical fiber between the incoherent light source and the microdevice array.

By doing so, the incoherent light source, acting as a source of heat and vibration, can be separated from the main body of the microscope, thus improving the stability of illumination.

In the above invention, the microscope may further include an illumination light source that emits illumination light having a wavelength band different from that of the incoherent light and a combining section that is disposed between the microdevice array and the objective lens and that combines the illumination light coming from the illumination light source and the incoherent light coming from the incoherent light source.

By doing so, it is possible to examine the specimen with the illumination light having a wavelength band different from that of the incoherent light while stimulating the specimen by selectively irradiating the specimen with the incoherent light via the microdevice array. For example, the illumination light source is preferably a mercury lamp.

In the above invention, the microscope may further include a second microdevice array that is disposed between the illumination light source and the combining section and that has an array of microdevices that reflect or transmit the illumination light coming from the illumination light source.

By doing so, it is possible to selectively irradiate the specimen with the incoherent light via the microdevice array while selectively irradiating the specimen with the illumination light via the second microdevice array, thus allowing the incoherent light and the illumination light to be used in different ways to examine the specimen.

In the above invention, the microscope may further include a splitting section that is disposed between the incoherent light source and the light-guiding member and that splits off part of the incoherent light coming from the incoherent light source from the path of light incident on the light-guiding member; and a combining section that is disposed between the microdevice array and the objective lens and that combines the incoherent light split off by the splitting section and the incoherent light coming from the microdevice array.

By doing so, it is possible to split the incoherent light coming from the incoherent light source into two optical paths with the splitting section, and it is possible to examine the specimen with one optical path while stimulating the specimen by selectively irradiating the specimen with the other optical path via the microdevice array.

In the above invention, the microscope may further include a second microdevice array that is disposed between the splitting section and the combining section and that has an array of microdevices that reflect or transmit the incoherent light split off by the splitting section.

By doing so, it is possible to split the incoherent light coming from the incoherent light source into two optical paths with the splitting section, and it is possible to selectively irradiate the specimen with one optical path via the microdevice array while selectively irradiating the specimen with the other optical path via the second microdevice array, thus allowing the two optical paths to be used in different ways to examine the specimen.

In the above invention, the microdevice array may be disposed such that a surface on which the microdevices are arranged faces sideward or downward.

By doing so, the surface of the microdevice array on which the microdevices are arranged, that is, the surface that selectively reflects or transmits the incoherent light, can be made resistant to adhesion of foreign matter such as dust, thus preventing a degradation in the uniformity of the incoherent light.

In the above invention, the microscope may further include an illumination light source that emits illumination light having a wavelength band different from that of the incoherent light, and the photodetector may detect light emitted from the specimen by irradiation with the illumination light coming from the illumination light source.

The present invention provides the advantage of allowing irradiation with uniform illumination light without decreasing the amount of light.

### BRIEF DESCRIPTION OF THE SEVERAL VIEWS OF THE DRAWINGS

Fig. 1A is a top view of an illumination unit of a microscope according to an embodiment of the present invention.
Fig. 1B is a side view of a detection optical system of the microscope according to the embodiment of the present invention.
Fig. 2 is a diagram illustrating an illumination region on a DMD in Fig. 1.
Fig. 3 is a diagram illustrating an illumination region on the DMD in Fig. 1.
Fig. 4 is a top view of an illumination unit according to a first modification.
Fig. 5 is a diagram illustrating an illumination region on a DMD in Fig. 4.
Fig. 6 is a top view of an illumination unit according to a second modification.
Fig. 7 is a diagram illustrating an illumination region on a DMD in Fig. 6.
Fig. 8 is a top view of an illumination unit according to a third modification.
Fig. 9 is a top view of an illumination unit according to a fourth modification.
Fig. 10 is a diagram illustrating examination of a specimen with the illumination unit in Fig. 9.
Fig. 11 is a top view of an illumination unit according to a fifth modification.
Fig. 12 is a side view of a detection optical system according to a sixth modification.
Fig. 13 is a diagram illustrating examination of a specimen with the detection optical system in Fig. 12.
Fig. 14 is a side view of a detection optical system according to a seventh modification.

### DETAILED DESCRIPTION OF THE INVENTION

A microscope 1 according to an embodiment of the present invention will be described below with reference to the drawings.

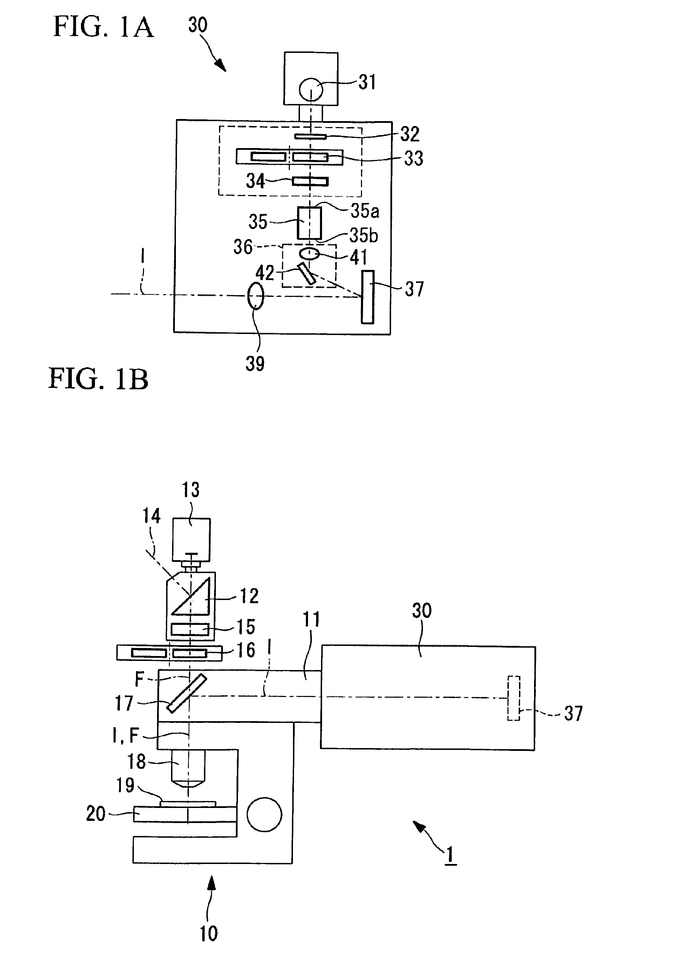

As shown in Fig. 1B, the microscope 1 according to this embodiment includes an illumination unit 30 for emitting incoherent light I, a detection optical system 10 for irradiating a specimen 19 with the incoherent light I coming from the illumination unit 30 and detecting fluorescence F emitted from the specimen 19, and a light-projecting section 11 optically connecting the illumination unit 30 and the detection optical system 10.

As shown in Fig. 1B, the detection optical system 10 includes a stage 20 on which the specimen 19 is placed, an objective lens 18 disposed opposite the specimen 19 on the stage 20, a dichroic mirror (splitting section) 17 disposed on the optical axes of the illumination unit 30 and the objective lens 18, a barrier filter 16 for transmitting only light in a particular wavelength band, an imaging lens 15 for imaging the light passing through the barrier filter 16, an eyepiece 14 for the observer to observe the specimen 19, a prism 12 for reflecting part of the light imaged by the imaging lens 15 toward the eyepiece 14, and a CCD camera (photodetector) 13 for detecting the light passing through the prism 12.

The objective lens 18 irradiates the specimen 19 on the stage 20 with the incoherent light I coming from the illumination unit 30 and collects the fluorescence F emitted from the specimen 19.

The dichroic mirror 17 reflects the incoherent light I coming from the illumination unit 30 toward the objective lens 18 and transmits the fluorescence F coming from the specimen 19. With such properties, the dichroic mirror 17 splits off the fluorescence F emitted from the specimen 19 and collected by the objective lens 18 from the optical path of the incoherent light I.

The barrier filter 16 blocks the incoherent light I coming from the illumination unit 30 and transmits only the fluorescence F coming from the specimen 19 and split off by the dichroic mirror 17.

The CCD camera 13 is disposed at a position conjugate to the position of a DMD 37, described later, to detect the fluorescence F coming from the specimen 19 and split off by the dichroic mirror 17.

As shown in Fig. 1A, the illumination unit 30 includes an incoherent light source 31 for emitting the incoherent light I, a shutter 32 disposed on the optical axis of the incoherent light source 31, an excitation filter 33 for transmitting only a component in a particular wavelength band, a light control mechanism 34 for adjusting the intensity of the incoherent light I passing through the excitation filter 33, an optical fiber (light-guiding member) 35 for guiding the incoherent light I adjusted by the light control mechanism 34, an irradiation optical system 36 for directing the incoherent light I guided by the optical fiber 35 toward the DMD 37 side, a DMD (microdevice array) 37 for selectively reflecting the incoherent light I directed by the irradiation optical system 36, and a projection lens 39 for projecting the incoherent light I selectively reflected by the DMD 37.

The shutter 32 has a drive mechanism for an opening/closing operation that closes the shutter 32 to block the incoherent light I emitted from the incoherent light source 31 and that opens the shutter 32 to allow the incoherent light I to pass therethrough.

Of the wavelength components of the incoherent light I passing through the shutter 32, the excitation filter 33 transmits light having the wavelength necessary for excitation of a fluorescent substance in the specimen 19.

The barrier filter 16 and the excitation filter 33 have a plurality of filters having different wavelength characteristics and a switching mechanism for switching among the plurality of filters, allowing the wavelength of the incoherent light I to be selected by switching among the filters.

The optical fiber 35, such as a quartz fiber, has an entrance surface 35a on which the incoherent light I adjusted by the light control mechanism 34 is incident and an exit surface 35b to which the incident incoherent light I is guided by repeated total reflection.

The irradiation optical system 36 includes a condensing lens 41 for collecting the incoherent light I guided by the optical fiber 35 and a mirror 42 disposed between the condensing lens 41 and the DMD 37 and reflecting the incoherent light I collected by the condensing lens 41 toward the DMD 37.

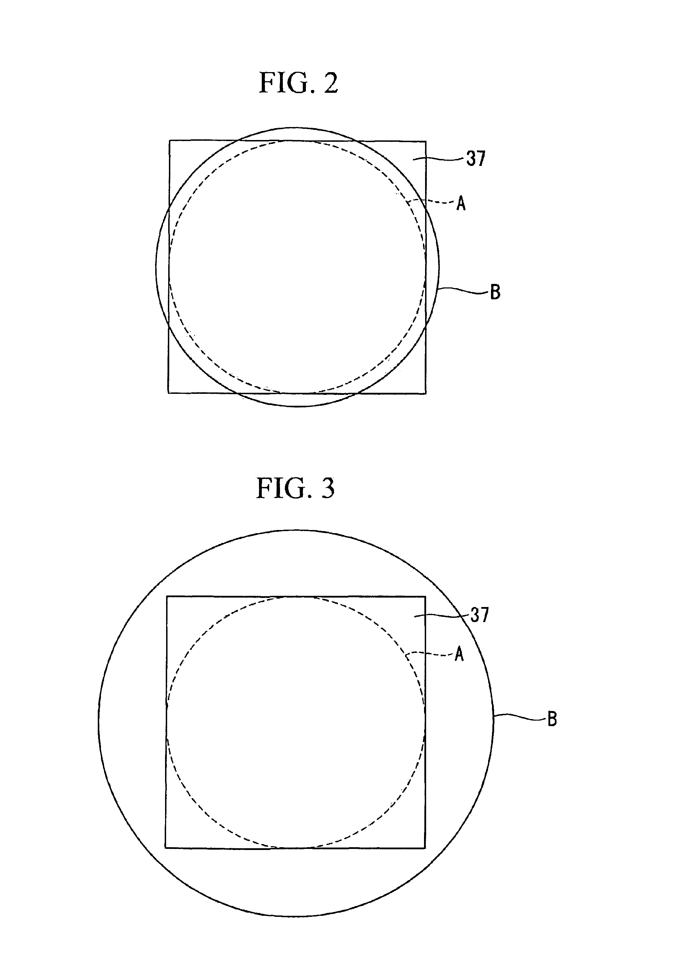

The condensing lens 41 projects the exit surface 35b of the optical fiber 35 onto the DMD 37. As shown in Fig. 2, additionally, the condensing lens 41 irradiates an irradiation region B larger than a microscope field A on the DMD 37 with the incoherent light I guided by the optical fiber 35.

The DMD 37 has an array of movable micromirrors (microdevices) (not shown) for reflecting the incoherent light I directed by the irradiation optical system 36. With such a structure, the DMD 37 operates (turns on and off) the movable micromirrors to selectively reflect part or all of the incoherent light I directed by the irradiation optical system 36 toward the projection lens 39.

The operation of the microscope 1 having the above structure will be described below.

In the microscope 1 according to this embodiment, the incoherent light I emitted from the incoherent light source 31 passes through the shutter 32 and the excitation filter 33, is adjusted by the light control mechanism 34, and is incident on the optical fiber 35. The incoherent light I incident on the optical fiber 35 is made uniform in the optical fiber 35 by repeated total reflection. The uniform incoherent light I is collected by the condensing lens 41 and is reflected by the mirror 42 toward the DMD 37.

The incoherent light I reflected by the mirror 42 is imaged on the DMD 37. Of the incoherent light I imaged on the DMD 37, only the incoherent light I reflected by on-state movable micromirrors of the DMD 37 is reflected toward the projection lens 39.

The incoherent light I projected by the projection lens 39 is reflected by the dichroic mirror 17 and is focused at a focal position on the specimen 19 by the objective lens 18.

At the focal position on the specimen 19, the fluorescent substance in the specimen 19 is excited to emit the fluorescence F. The emitted fluorescence F is collected by the objective lens 18, passes through the dichroic mirror 17, the barrier filter 16, the imaging lens 15, and the prism 12 in the above order, and is detected by the CCD camera 13, thus generating a fluorescence image.

At this time, the movable micromirrors for reflecting the incoherent light I on the DMD 37 can be switched to vary the region irradiated with the incoherent light I on the specimen 19, thus obtaining an image of the specimen 19 in any region. The incoherent light I with which the specimen 19 is irradiated is made uniform by the optical fiber 35. Thus, the microscope 1 according to this embodiment can irradiate the specimen 19 with uniform incoherent light I without decreasing the amount of light, thus obtaining a fluorescence image without unevenness.

In addition, if the optical fiber 35 is a quartz fiber, the incoherent light I can be guided while being efficiently made uniform. A quartz fiber is suitable as the optical fiber 35 because it has high transmittance for visible light (400 to 600 nm).

As means for making the incoherent light I uniform, a diffuser, an optical element such as a fiber rod, or Koehler (telecentric) illumination can be used; to maintain incoherence and efficiently make the incoherent light I uniform, as in this embodiment, an optical element such as a fiber rod is best suited.

As the optical fiber 35, a large-diameter fiber matching the NA of the incoherent light source 31 is required.

In addition, if the exit surface 35b of the optical fiber 35 is projected onto the DMD 37 by the irradiation optical system 36 (condensing lens 41), the incoherent light I can be efficiently made uniform.

For example, if the irradiation optical system 36 is a critical optical system, the specimen 19 can be irradiated with uniform incoherent light I while ensuring incoherence.

Koehler illumination has problems such as unevenness because it has angular properties (light distribution properties). In addition, to achieve uniform illumination by Koehler illumination, an area larger than the DMD 37 needs to be irradiated. Furthermore, critical illumination is advantageous in preserving incoherence. Accordingly, the irradiation optical system 36 is preferably a critical optical system rather than Koehler illumination.

As shown in Fig. 3, the irradiation optical system 36 may irradiate a region larger than the region where the movable micromirrors of the DMD 37 are arranged, with the incoherent light I guided by the optical fiber 35.

It is known that the NA of an optical fiber varies when the optical fiber is bent, which causes unevenness in the amount of light on the periphery of the irradiated region. Such unevenness in the amount of light is also caused by, for example, variations in NA due to the manufacturing process of the optical fiber.

Accordingly, if a region larger than the region where the movable micromirrors are arranged is irradiated (overfilled) with the incoherent light I, it is possible to avoid insufficient light on the periphery of the region B irradiated with the incoherent light I on the specimen 19, thus improving the uniformity of the incoherent light I. The overfill level may be set such that uneven illumination can be compensated for at the end surface of the optical fiber 35, and is preferably set such that, for example, a region about 1.2 times the area of the microscope field A is illuminated.

The DMD 37 is preferably disposed such that the surface on which the movable micromirrors are arranged extends vertically, more preferably, such that the surface faces downward.

By doing so, the surface of the DMD 37 on which the movable micromirrors are arranged, that is, the surface that selectively reflects or transmits the incoherent light I, can be made resistant to adhesion of foreign matter such as dust, thus preventing a degradation in the uniformity of the incoherent light I.

### First Modification

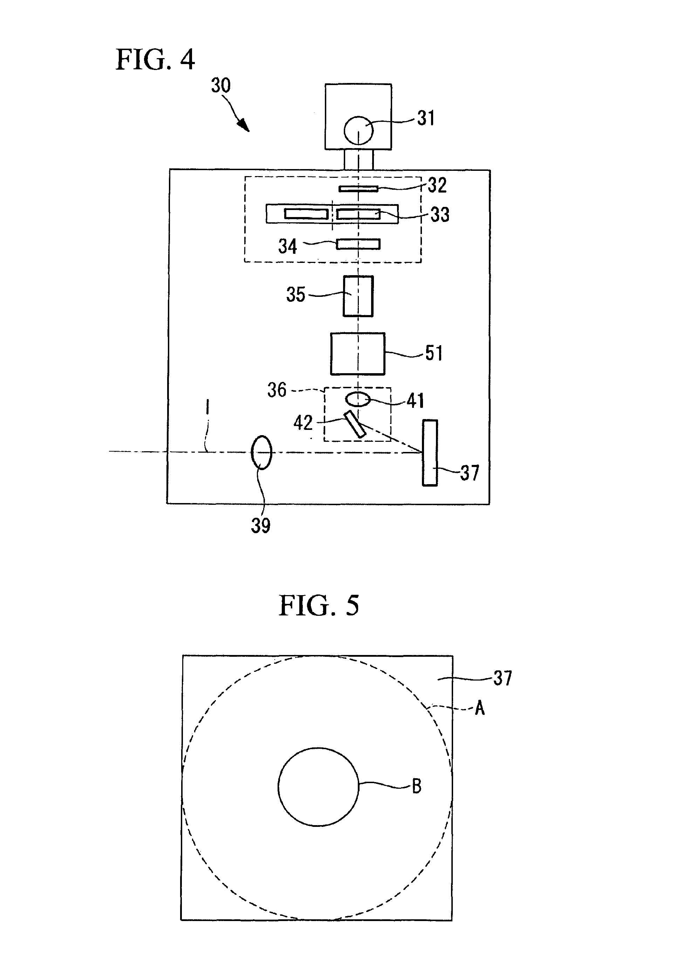

In a first modification of the microscope 1 according to this embodiment, as shown in Fig. 4, a zoom mechanism 51 for changing the focal distance of the incoherent light I may be provided between the optical fiber 35 and the DMD 37.

With the zoom mechanism 51, the focal distance of the incoherent light I can be changed to change the area of the region B irradiated with the incoherent light I on the specimen 19, thus obtaining an enlarged or reduced image of the specimen 19. In addition, as shown in Fig. 5, for example, the incoherent light I can be collected near the center of the DMD 37 to more intensely illuminate the center of the microscope field A, thus obtaining a brighter image.

### Second Modification

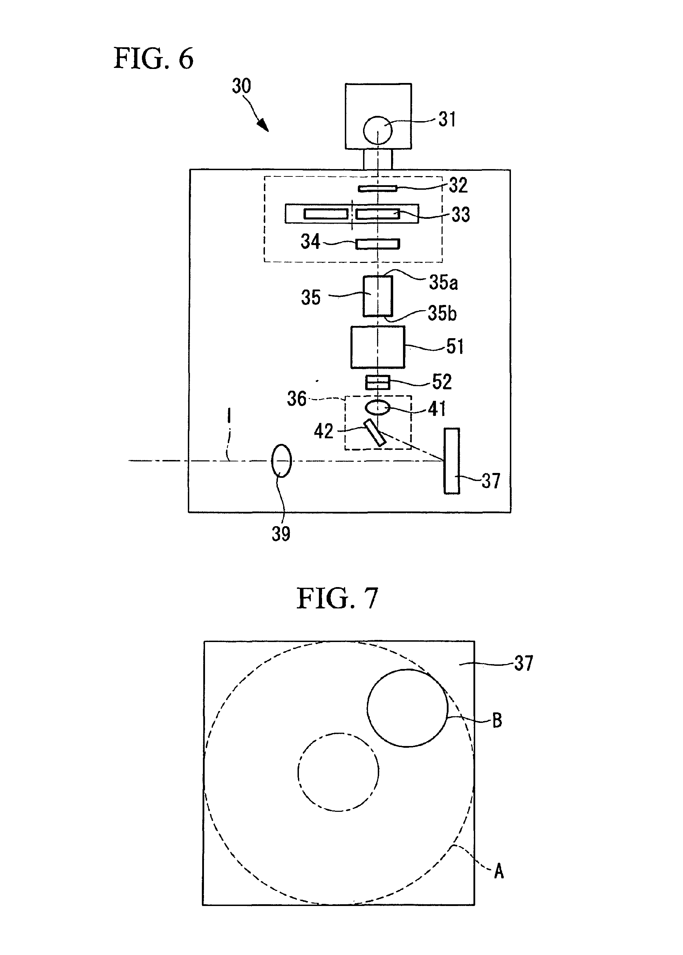

In a second modification of the microscope 1 according to this embodiment, as shown in Fig. 6, a shift mechanism 52 for shifting the incoherent light I in a direction perpendicular to the optical axis may be provided between the zoom mechanism 51 and the DMD 37.

With the shift mechanism 52, as shown in Fig. 7, the incoherent light I can be shifted in a direction perpendicular to the optical axis to shift the irradiation region B collected by the zoom mechanism 51 to any region (for example, the peripheral region of the microscope field A). This allows any region to be intensely irradiated with the incoherent light I, thus obtaining a bright image in that region.

### Third Modification

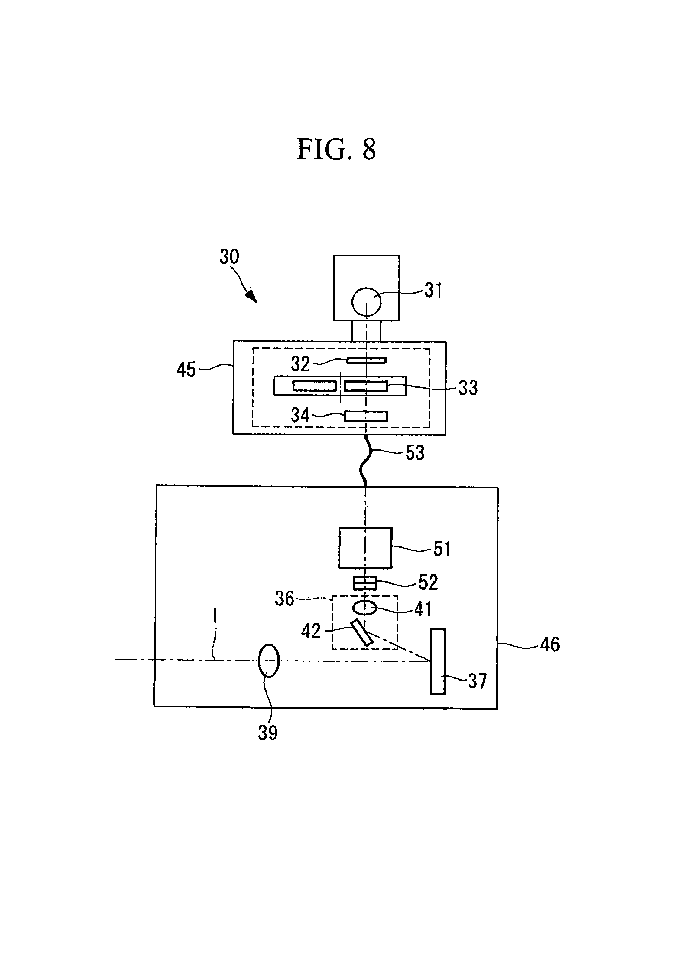

In a third modification of the microscope 1 according to this embodiment, as shown in Fig. 8, the illumination unit 30 may be divided into a light source unit 45 including the incoherent light source 31, the shutter 32, the excitation filter 33, and the light control mechanism 34 and an optical unit 46 including the zoom mechanism 51, the shift mechanism 52, the irradiation optical system 36, the DMD 37, and the projection lens 39, and an optical fiber 53 optically connecting the light source unit 45 and the optical unit 46 may be provided.

By doing so, the incoherent light source 31, acting as a source of heat and vibration, can be separated from the detection optical system 10, thus improving the stability of illumination. In addition, the optical fiber 53 can be elongated to efficiently make the incoherent light I uniform, thus obtaining a fluorescence image without unevenness.

### Fourth Modification

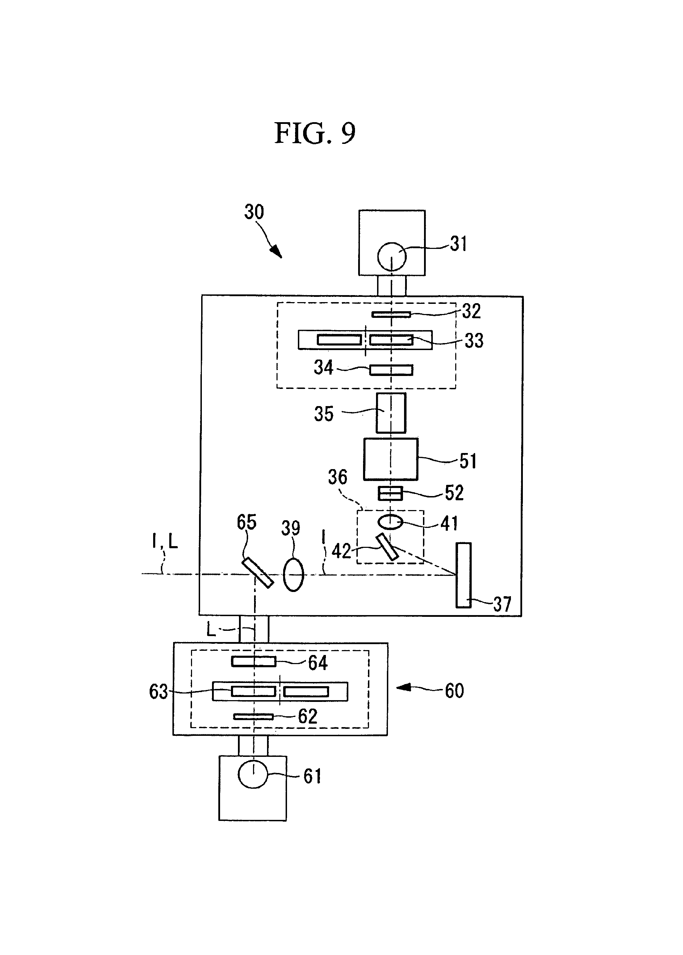

In a fourth modification of the microscope 1 according to this embodiment, as shown in Fig. 9, a light source unit 60 that emits illumination light L having a wavelength band different from that of the incoherent light I may be provided, and a combining dichroic mirror (combining section) 65 may be provided between the projection lens 39 and the dichroic mirror 17.

The light source unit 60 has the same configuration as the light source unit 45 described above except for the light source and includes an illumination light source 61 such as a mercury lamp, a shutter 62, an excitation filter 63, and a light control mechanism 64.

The combining dichroic mirror 65 reflects the illumination light L coming from the light source unit 60 toward the dichroic mirror 17 and transmits the incoherent light I reflected by the DMD 37. With such properties, the combining dichroic mirror 65 combines the illumination light L coming from the illumination light source 61 and the incoherent light I coming from the incoherent light source 31.

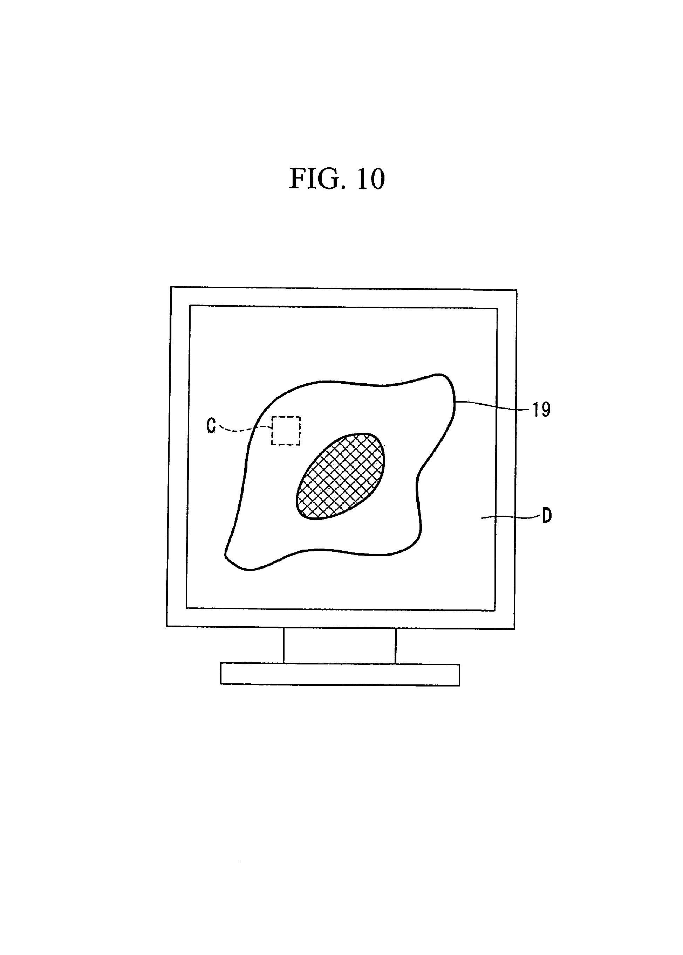

As shown in Fig. 10, the microscope 1 according to this modification allows examination of the specimen 19 (examination region D) with the illumination light L having a wavelength band different from that of the incoherent light I while stimulating the specimen 19 by selectively irradiating a region C on the specimen 19 with the incoherent light I via the DMD 37.

In this modification, a second DMD (not shown) having an array of movable micromirrors for reflecting the illumination light L coming from the illumination light source 61 may be provided between the illumination light source 61 and the combining dichroic mirror 65.

By doing so, it is possible to selectively irradiate the specimen 19 with the incoherent light I via the DMD 37 while selectively irradiating the specimen 19 with the illumination light L via the second DMD, thus allowing the incoherent light I and the illumination light L to be used in different ways to examine the specimen 19.

### Fifth Modification

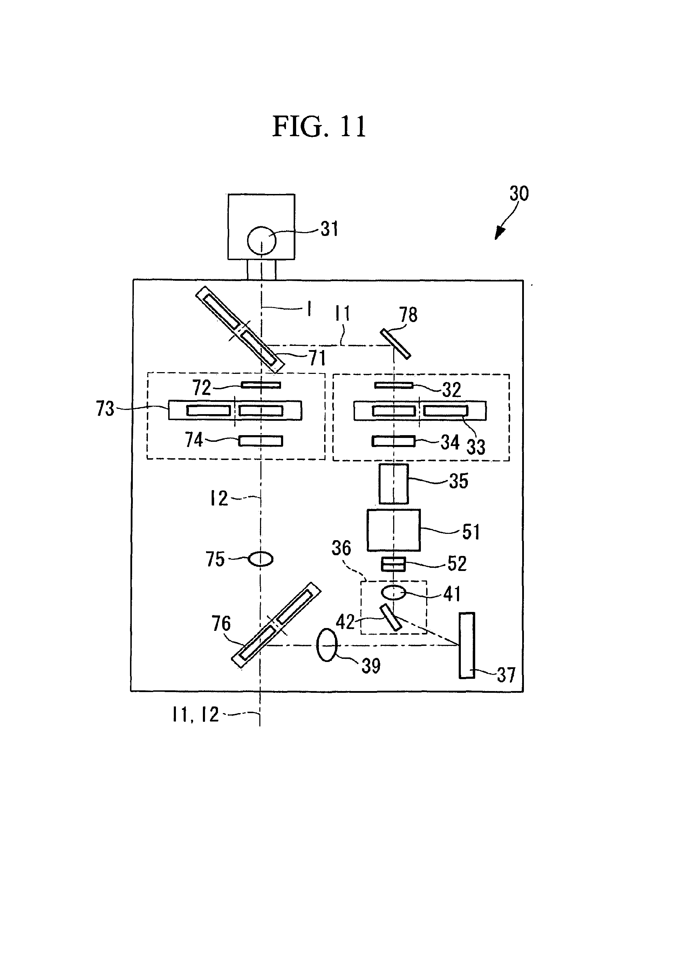

In a fifth modification of the microscope 1 according to this embodiment, as shown in Fig. 11, the incoherent light I coming from the incoherent light source 31 may be split into incoherent light I1 and incoherent light I2, and the specimen 19 may be irradiated with the light I1 and I2.

As shown in Fig. 11, the illumination unit 30 according to this modification includes a dichroic mirror (splitting section) 71 disposed on the optical axis of the incoherent light source 31. Of the incoherent light I coming from the incoherent light source 31, the dichroic mirror 71 reflects a predetermined wavelength component (incoherent light I1) and transmits another wavelength component (incoherent light I2). With such properties, the dichroic mirror 71 splits the incoherent light I coming from the incoherent light source 31 into the incoherent light I1 and the incoherent light I2.

Provided in the optical path of the incoherent light I1 are a mirror 78 for deflecting the incoherent light I1, the shutter 32, the excitation filter 33, the light control mechanism 34, the optical fiber 35, the zoom mechanism 51, the shift mechanism 52, the irradiation optical system 36, the DMD 37, the projection lens 39, and a dichroic mirror (splitting section) 76, described later.

Provided in the optical path of the incoherent light I2 are a shutter 72 disposed on the optical axis of the incoherent light source 31, an excitation filter 73 for transmitting only a component in a particular wavelength band, a light control mechanism 74 for adjusting the intensity of the incoherent light I2 passing through the excitation filter 73, a projection lens 75 for projecting the incoherent light I2 adjusted by the light control mechanism 74, and the dichroic mirror 76. As the projection lens 75, for example, a Koehler illumination optical system is used so that the entire field of view can be evenly illuminated.

The dichroic mirror 76 reflects the incoherent light I1 reflected by the DMD 37 and transmits the incoherent light I2 passing through the dichroic mirror 71. With such properties, the dichroic mirror 76 combines the incoherent light I1 and the incoherent light I2.

Specifically, for example, the dichroic mirror 71 reflects a component having a wavelength shorter than 450 nm and transmits a component having a wavelength of 450 nm or longer. This allows a wavelength around 405 nm to be selected as the central wavelength of the incoherent light I1 passing along the reflection optical path and a wavelength around 488 nm to be selected as the central wavelength of the incoherent light I2 passing along the transmission optical path. By doing so, GFP can be examined over the entire field of view with the incoherent light I2 while stimulating the specimen 19 with the incoherent light I1.

The dichroic mirrors 71 and 76 have a plurality of filters having different wavelength characteristics and a switching mechanism for switching among the plurality of filters, allowing the wavelengths of the incoherent light I1 and I2 to be selected by switching among the filters.

As described above, the microscope 1 according to this modification provides the same advantageous effects as the microscope 1 according to the fourth modification described above without using two light sources, that is, only using the incoherent light source 31. That is, as shown in Fig. 10, the microscope 1 according to this modification allows examination of the specimen 19 (examination region D) with the incoherent light I2 having a wavelength band different from that of the incoherent light I1 while stimulating the specimen 19 by selectively irradiating the region C on the specimen 19 with the incoherent light I1 via the DMD 37.

In this modification, a second DMD (not shown) having an array of movable micromirrors for reflecting the incoherent light I2 may be provided between the light control mechanism 74 and the projection lens 75.

By doing so, it is possible to selectively irradiate the specimen 19 with the incoherent light I1 via the DMD 37 while selectively irradiating the specimen 19 with the incoherent light I2 via the second DMD, thus allowing the incoherent light I1 and I2 to be used in different ways to examine the specimen 19.

### Sixth Modification

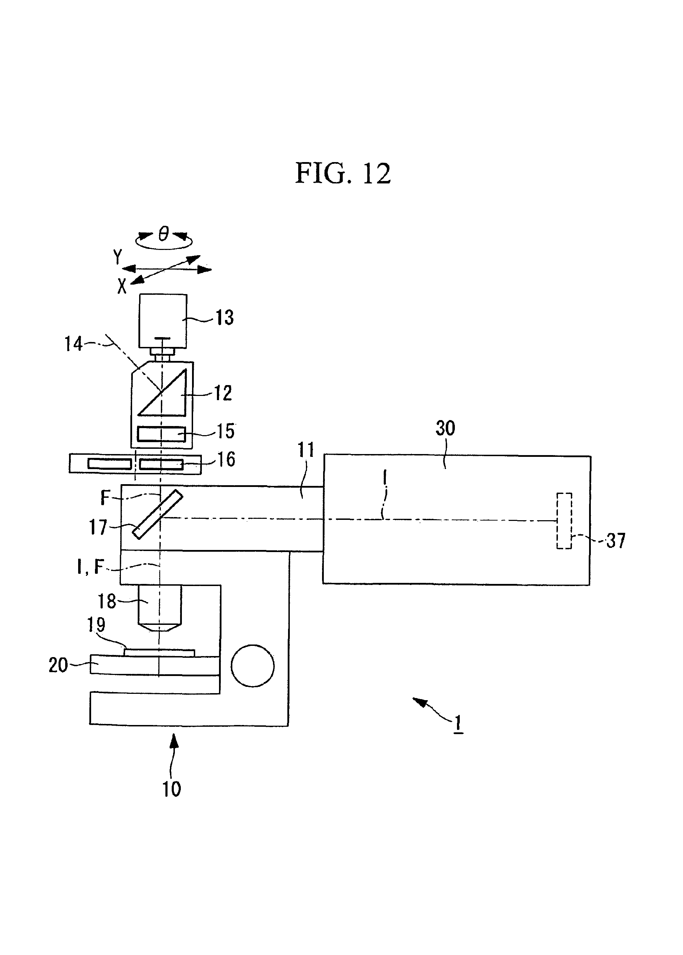

In a sixth modification of the microscope 1 according to this embodiment, as shown in Fig. 12, a mechanism for adjusting the position of the CCD camera 13 in the X and Y directions (not shown) and a mechanism for adjusting the angle of rotation of the CCD camera 13 about the optical axis (not shown) may be provided on the mount of the CCD camera 13.

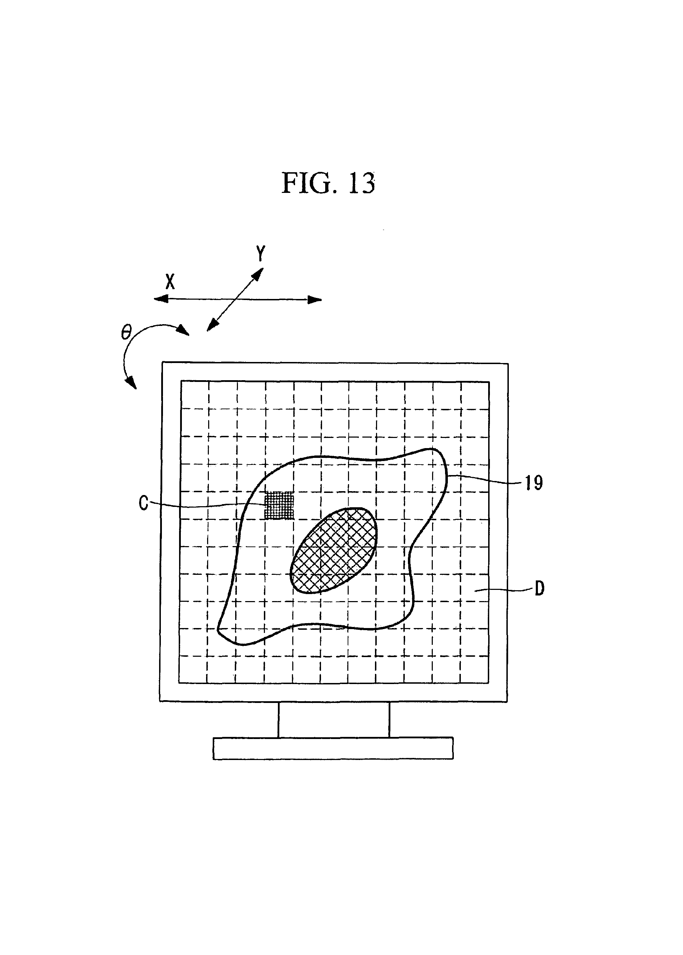

With this configuration, as shown in Fig. 13, the specimen 19 can be examined at any position by operating the position adjustment mechanism and can be examined at any angle by operating the angle-of-rotation adjustment mechanism. The position adjustment mechanism and the angle-of-rotation adjustment mechanism may instead be provided on the DMD 37 side.

### Seventh Modification

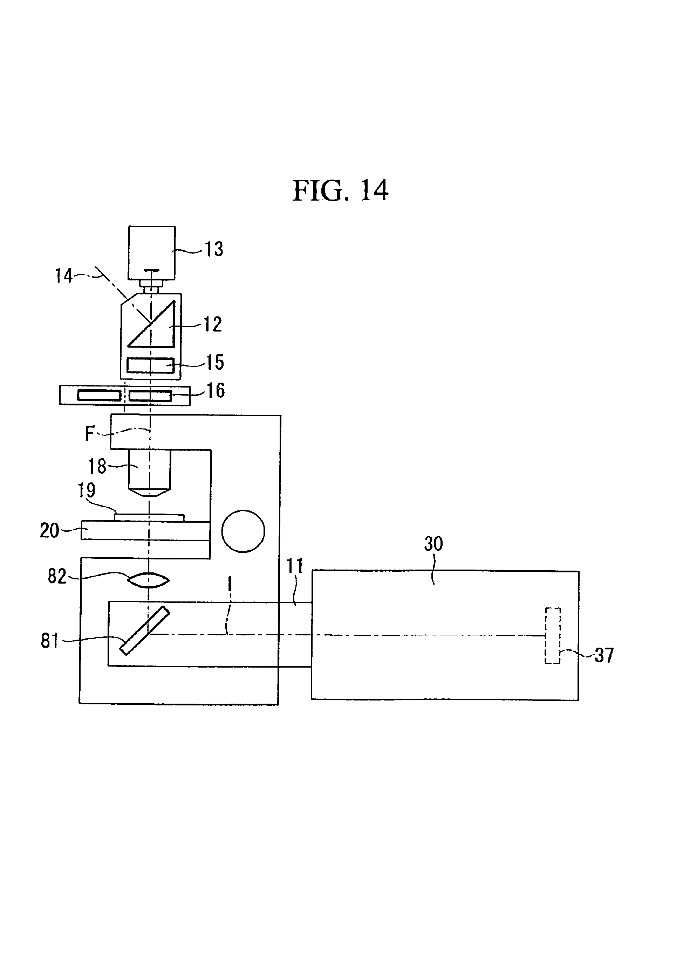

In a seventh modification of the microscope 1 according to this embodiment, as shown in Fig. 14, the illumination unit 30 for emitting the incoherent light I may be disposed opposite the objective lens 18 with the specimen 19 therebetween. In Fig. 14, reference numeral 81 denotes a mirror for reflecting the incoherent light I coming from the illumination unit 30 toward the specimen 19, and reference numeral 82 denotes a condenser lens for irradiating the specimen 19 with the incoherent light I reflected by the mirror 81.

This structure eliminates the need for the splitting section, namely, the dichroic mirror 17 (see Fig. 1B).

The illumination unit 30 used in this modification may be any type of illumination unit 30 used in the embodiment and modifications described above.

Whereas the embodiments of the present invention have been described in detail above with reference to the drawings, the specific configuration is not limited to these embodiments.

For example, although the DMD 37 has been described in the embodiments as selectively reflecting the incoherent light I, it may selectively transmit the incoherent light I.

In addition, although the light-guiding member has been described by taking an optical fiber, such as a quartz fiber, as an example, any member capable of guiding the incoherent light I by repeated total reflection, such as a light guide rod, can be used.

In addition, although the DMD 37 having a plurality of movable micromirrors has been described as an example of a microdevice array, it may instead be a liquid crystal array having a plurality of liquid crystal devices.

## Claims

1. A microscope (1) comprising:
an incoherent light source (31) that is configured to emit incoherent light;
a light-guiding member (35) on which the incoherent light coming from the incoherent light source (31) is incident and which is configured to guide the incident incoherent light by repeated total reflection;
a microdevice array (37) having an array of microdevices each configured to reflect or transmit the incoherent light guided by the light-guiding member (35);
a pattern illumination optical system that is configured to irradiate a specimen with the incoherent light reflected or transmitted by the microdevice array (37);
an objective lens (18) that is configured to collect light coming from the specimen;
a photodetector (13) that is disposed at a position conjugate to the position of the microdevice array (37) and that is configured to detect the light coming from the specimen and collected by the objective lens (18); and
an irradiation optical system (36) that is configured to irradiate the microdevice array (37) with the incoherent light guided by the light-guiding member (35),
**characterized in that**
the irradiation optical system (36) is configured to project an exit surface (35b) of the light-guiding member (35) onto the microdevice array (37), wherein
the microscope (1) further comprises a zoom mechanism (51) that is disposed between the light-guiding member (35) and the microdevice array (37) and that is configured to change the size of an area, which is irradiated with the incoherent light, on the microdevice array (37) by changing the focal distance of the incoherent light.

2. The microscope (1) according to Claim 1, wherein the pattern illumination optical system includes the objective lens (18),
the microscope (1) further comprising a splitting section (71) that is configured to split off the light coming from the specimen and collected by the objective lens (18) from the incoherent light and direct the light to the photodetector (13).

3. The microscope (1) according to Claim 1 or 2, wherein the pattern illumination optical system includes a condenser lens (41) disposed opposite the objective lens (18) with the specimen therebetween.

4. The microscope (1) according to any one of Claims 1 to 3, wherein the light-guiding member (35) is a quartz fiber.

5. The microscope (1) according to any one of Claims 1 to 4, wherein the irradiation optical system (36) is configured to irradiate a region larger than a region where the microdevices of the microdevice array (37) are arranged with the incoherent light guided by the light-guiding member (35).

6. The microscope (1) according to Claim 1, further comprising a shift mechanism (52) that is disposed between the zoom mechanism (51) and the microdevice array (37) and that is configured to shift the incoherent light in a direction perpendicular to an optical axis thereof.

7. The microscope (1) according to any one of Claims 1 to 6, wherein the incoherent light source (31) is independently provided, the microscope (1) further comprising an optical fiber between the incoherent light source (31) and the microdevice array (37).

8. The microscope (1) according to any one of Claims 1 to 7, further comprising:
an illumination light source (61) that is configured to emit illumination light having a wavelength band different from that of the incoherent light; and
a combining section (65) that is disposed between the microdevice array (37) and the objective lens (18) and that is configured to combine the illumination light coming from the illumination light source (61) and the incoherent light coming from the incoherent light source (31).

9. The microscope (1) according to any one of Claims 1 to 8, wherein the microdevice array (37) is disposed such that a surface on which the microdevices are arranged faces sideward or downward.

10. The microscope (1) according to any one of Claims 1 to 9 , further comprising an illumination light source (61) that is configured to emit illumination light having a wavelength band different from that of the incoherent light,
wherein the photodetector (13) is configured to detect light emitted from the specimen by irradiation with the illumination light coming from the illumination light source (61).

## Patentansprüche

1. Mikroskop (1) aufweisend:
eine inkohärente Lichtquelle (31), die dazu eingerichtet ist, inkohärentes Licht zu emittieren;
ein Lichtführungselement (35), auf das das von der inkohärenten Lichtquelle (31) kommendes inkohärenten Licht einfällt und das dazu eingerichtet ist, das einfallende inkohärente Licht durch wiederholte Totalreflexion zu führen;
eine Mikrovorrichtungsanordnung (37) mit einer Anordnung von Mikrovorrichtungen, von denen jede dazu eingerichtet ist, das durch das Lichtführungselement (35) geführte inkohärente Licht zu reflektieren oder zu transmittieren;
ein optisches System zur Musterbeleuchtung, das dazu eingerichtet ist, eine Probe mit dem inkohärenten Licht, das von der Mikrovorrichtungsanordnung (37) reflektiert oder transmittiert wurde, zu bestrahlen;
eine Objektivlinse (18), die dazu eingerichtet ist, das von der Probe kommende Licht zu sammeln;
einen Fotodetektor (13), der an einer Position konjugiert zu der Position der Mikrovorrichtungsanordnung (37) angeordnet ist und der dazu eingerichtet ist, das von der Probe kommende und durch die Objektivlinse (18) gesammelte Licht zu erfassen;
ein optisches System zur Bestrahlung (36), das dazu eingerichtet ist, die Mikrovorrichtungseinrichtung (37) mit dem durch das Lichtführungselement (35) geführte inkohärente Licht zu bestrahlen,
**dadurch gekennzeichnet, dass**
das optische System zur Bestrahlung (36) dazu eingerichtet ist, eine Ausgangsfläche (35b) des Lichtführungselements (35) auf die Mikrovorrichtungsanordnung (37) zu projizieren, wobei
das Mikroskop (1) ferner einen Zoom-Mechanismus (51) aufweist, der zwischen dem Lichtführungselement (35) und der Mikrovorrichtungsanordnung (37) angeordnet ist, und der dazu eingerichtet ist, die Größe eines Bereichs, der mit dem inkohärenten Licht bestrahlt wurde, durch Ändern der Brennweite des inkohärenten Lichts auf der Mikrovorrichtungsanordnung (37) zu ändern.

2. Mikroskop (1) nach Anspruch 1, bei dem das optische System zur Musterbeleuchtung die Objektivlinse (18) enthält, und
das Mikroskop (1) ferner einen Teilungsabschnitt (71) aufweist, der dazu eingerichtet ist, das von der Probe kommende und durch die Objektivlinse (18) gesammelte Licht von dem inkohärenten Licht abzuspalten und das Licht zu dem Fotodetektor (13) zu richten.

3. Mikroskop (1) nach Anspruch 1 oder 2, bei dem das optische System zur Musterbeleuchtung eine Kondensorlinse (41) enthält, die gegenüber der Objektivlinse (18) mit der Probe dazwischen angeordnet ist.

4. Mikroskop (1) nach einem der Ansprüche 1 bis 3, bei dem das Lichtführungselement (35) eine Quarzfaser ist.

5. Mikroskop (1) nach einem der Ansprüche 1 bis 4, bei dem das optische System zur Beleuchtung (36) dazu eingerichtet ist, einen Bereich, der größer als ein Bereich ist, in dem die Mikrovorrichtungen der Mikrovorrichtungsanordnung (37) angeordnet sind, mit dem durch das Lichtführungselement (35) geführte inkohärente Licht zu bestrahlen.

6. Mikroskop (1) nach Anspruch 1, ferner aufweisend einen Verlagerungsmechanismus (52), der zwischen dem Zoom-Mechanismus (51) und der Mikrovorrichtungsanordnung (37) angeordnet ist, und der dazu eingerichtet ist, das inkohärente Licht in eine Richtung senkrecht zu einer optischen Achse von diesem zu verlagern.

7. Mikroskop (1) nach einem der Ansprüche 1 bis 6, bei dem die inkohärente Lichtquelle (31) unabhängig bereitgestellt ist, und das Mikroskop (1) ferner eine optische Faser zwischen der inkohärenten Lichtquelle (31) und der Mikrovorrichtungsanordnung (37) aufweist.

8. Mikroskop (1) nach einem der Ansprüche 1 bis 7, ferner aufweisend:
eine Beleuchtungslichtquelle (61), die dazu eingerichtet ist, Beleuchtungslicht mit einem Wellenlängenband, das sich von dem des inkohärenten Lichts unterscheidet, zu emittieren; und
einen Kombinationsabschnitt (65), der zwischen der Mikrovorrichtungsanordnung (37) und der Objektivlinse (18) angeordnet ist, und der dazu eingerichtet ist, das von der Beleuchtungslichtquelle (61) kommende Beleuchtungslicht und das von der inkohärenten Lichtquelle (31) kommende inkohärente Licht zu kombinieren.

9. Mikroskop (1) nach einem der Ansprüche 1 bis 8, bei dem die Mikrovorrichtungsanordnung (37) so angeordnet ist, dass eine Fläche, auf der die Mikrovorrichtungen angeordnet sind, seitwärts oder nach unten zeigt.

10. Mikroskop (1) nach einem der Ansprüche 1 bis 9, ferner aufweisend eine Beleuchtungslichtquelle (61), die dazu eingerichtet ist, Beleuchtungslicht mit einem Wellenlängenband, das sich von dem des inkohärenten Lichts unterscheidet, zu emittieren,
wobei der Fotodetektor (13) dazu eingerichtet ist, Licht, das von der Probe emittiert wurde durch Bestrahlung mit dem von der Beleuchtungslichtquelle (61) kommenden Beleuchtungslicht, zu erfassen.

## Revendications

1. Microscope (1) comprenant :
une source de lumière incohérente (31) qui est configurée pour émettre une lumière incohérente ;
un élément de guidage de lumière (35) sur lequel la lumière incohérente venant de la source de lumière incohérente (31) est incidente et qui est configuré pour guider la lumière incohérente incidente par réflexion totale répétée ;
une matrice de micro-dispositifs (37) comportant une matrice de micro-dispositifs chacun configuré pour réfléchir ou transmettre la lumière incohérente guidée par l'élément de guidage de lumière (35) ;
un système optique d'éclairage à motifs qui est configuré pour irradier un spécimen avec la lumière incohérente réfléchie ou transmise par la matrice de micro-dispositifs (37) ;
un objectif (18) qui est configuré pour collecter la lumière venant du spécimen ;
un photodétecteur (13) qui est disposé au niveau d'une position conjuguée avec la position de la matrice de micro-dispositifs (37) et qui est configuré pour détecter la lumière venant du spécimen et collectée par l'objectif (18) ; et
un système optique d'irradiation (36) qui est configuré pour irradier la matrice de micro-dispositifs (37) avec la lumière incohérente guidée par l'élément de guidage de lumière (35),
**caractérisé en ce que**
le système optique d'irradiation (36) est configuré pour projeter une surface de sortie (35b) de l'élément de guidage de lumière (35) sur la matrice de micro-dispositifs (37), dans lequel
le microscope (1) comprend en outre un mécanisme de zoom (51) qui est disposé entre l'élément de guidage de lumière (35) et la matrice de micro-dispositifs (37) et qui est configuré pour changer la taille d'une zone, qui est irradiée avec la lumière incohérente, sur la matrice de micro-dispositifs (37) en changeant la distance focale de la lumière incohérente.

2. Microscope (1) selon la revendication 1, dans lequel le système optique d'éclairage à motifs comprend l'objectif (18),
le microscope (1) comprenant en outre une section de séparation (71) qui est configurée pour séparer la lumière venant du spécimen et collectée par l'objectif (18) à partir de la lumière incohérente et diriger la lumière vers le photodétecteur (13).

3. Microscope (1) selon la revendication 1 ou 2, dans lequel le système optique d'éclairage à motifs comprend une lentille de condenseur (41) disposée opposée à l'objectif (18) avec le spécimen entre eux.

4. Microscope (1) selon l'une quelconque des revendications 1 à 3, dans lequel l'élément de guidage de lumière (35) est une fibre de quartz.

5. Microscope (1) selon l'une quelconque des revendications 1 à 4, dans lequel le système optique d'irradiation (36) est configuré pour irradier une région plus grande qu'une région dans laquelle les micro-dispositifs de la matrice de micro-dispositifs (37) sont agencés avec la lumière incohérente guidée par l'élément de guidage de lumière (35).

6. Microscope (1) selon la revendication 1, comprenant en outre un mécanisme de décalage (52) qui est disposé entre le mécanisme de zoom (51) et la matrice de micro-dispositifs (37) et qui est configuré pour décaler la lumière incohérente dans une direction perpendiculaire à son axe optique.

7. Microscope (1) selon l'une quelconque des revendications 1 à 6, dans lequel la source de lumière incohérente (31) est prévue indépendamment, le microscope (1) comprenant en outre une fibre optique entre la source de lumière incohérente (31) et la matrice de micro-dispositifs (37).

8. Microscope (1) selon l'une quelconque des revendications 1 à 7, comprenant en outre :
une source de lumière d'éclairage (61) qui est configurée pour émettre une lumière d'éclairage présentant une bande de longueur d'onde différente de celle de la lumière incohérente ; et
une section de combinaison (65) qui est disposée entre la matrice de micro-dispositifs (37) et l'objectif (18) et qui est configurée pour combiner la lumière d'éclairage venant de la source de lumière d'éclairage (61) et la lumière incohérente venant de la source de lumière incohérente (31).

9. Microscope (1) selon l'une quelconque des revendications 1 à 8, dans lequel la matrice de micro-dispositifs (37) est disposée d'une manière telle qu'une surface sur laquelle les micro-dispositifs sont agencés est en regard vers le côté ou vers le bas.

10. Microscope (1) selon l'une quelconque des revendications 1 à 9, comprenant en outre une source de lumière d'éclairage (61) qui est configurée pour émettre une lumière d'éclairage présentant une bande de longueur d'onde différente de celle de la lumière incohérente,
dans lequel le photodétecteur (13) est configuré pour détecter la lumière émise depuis le spécimen par irradiation avec la lumière d'éclairage venant de la source de lumière d'éclairage (61).
